# FASCICULE DE BREVET EUROPEEN

(11) **EP 2 716 162 B1**
(45) Date de publication et mention de la délivrance du brevet: **16.08.2017**
(21) Numéro de dépôt: 13186110.6
(22) Date de dépôt: 26.09.2013
(51) Int. Cl.: A23J 1/09, A23B 5/005, A23L 15/00

(54) **Procédé de production de blanc d'oeuf liquide**
Verfahren zur Herstellung von Flüssig-Eiweiss.
Process for the preparation of liquid egg white.

(30) Priorité: 04.10.2012 FR 1259454
(43) Date de publication de la demande: 09.04.2014
(73) Titulaire: Ovoteam, 56500 Naizin (FR)
(72) Inventeur: Galet, Olivier, 22950 TREGUEUX (FR); Detre, Catherine, 22400 LAMBALLE (FR); Breton, Valérie, 53100 SAINT BAUDELLE (FR)
(74) Mandataire: Vidon Brevets & Stratégie

(56) Documents cités:
- EP-A1- 1 021 956
- WO-A1-95/14388
- WO-A1-97/02751
- WO-A1-98/01038
- AU-A- 7 740 781
- DE-A1- 2 746 084
- DE-A1- 4 413 500
- JP-A- S62 122 551
- US-A- 5 843 505
- US-A- 6 090 425
- DATABASE GNPD [Online] MINTEL; février 2000 (2000-02), ConAgra Foods: "Egg Whites", XP002698530, Database accession no. 10236007
- DATABASE GNPD [Online] MINTEL; novembre 2005 (2005-11), Burnbrae Farms: "Liquid Egg Product", XP002698531, Database accession no. 10241416
- DATABASE GNPD [Online] MINTEL; août 2012 (2012-08), H-E-B: "Real Egg Whites", XP002698532, Database accession no. 1863018

## Description

Le domaine de l'invention est celui des ovoproduits, ou produits transformés à base d'oeufs, destinés notamment, mais non exclusivement, au grand public et distribués par exemple par les grandes et moyennes surfaces, ou encore par des distributeurs spécialisés, par exemple à l'attention des sportifs.

Plus précisément, l'invention concerne la fourniture de blanc d'oeuf liquide, sous une forme adaptée notamment au grand public, et le cas échéant conservable à température ambiante.

Différentes techniques ont d'ores et déjà été proposées pour fabriquer et fournir du blanc d'oeuf liquide. Par exemple, le document de brevet FR-2750574 (LIOT) propose d'appliquer un traitement thermique particulier, à du blanc d'oeuf contenu dans une cuve, avec une montée en température très lente (au moins 30 à 240 minutes) puis un maintien à une température comprise entre 40° et 48° pendant plusieurs jours. Le blanc d'oeuf est ensuite placé dans des récipients étanches à l'air, qui peuvent être commercialisés.

Clairement, un inconvénient de cette technique est la durée du traitement, qui dure plusieurs jours. Un autre inconvénient est que ce traitement de longue durée peut porter atteinte à certaines qualités du produit, ce qui rend plus difficile l'obtention des propriétés moussantes et la stabilité de la mousse, essentielles pour la fabrication de produits tels que les mousses au chocolat ou les iles flottantes.

Le document de brevet EP-1021956 (LIOT) propose une approche légèrement différente, notamment du fait qu'il ne concerne pas spécifiquement le blanc d'oeuf, mais également le jaune d'oeuf ou l'oeuf entier. Selon ce document, le produit (notamment le blanc d'oeuf) est également pasteurisé en cuve, puis ensuite transféré dans des emballages étanches, après refroidissement. En outre, à nouveau, les temps de traitement préconisés sont très longs.

Selon une autre approche, décrite dans le document EP-0373026 (SICA) le traitement, appliqué après transfert dans des récipients étanches, suppose également des pasteurisations de très longue durée, entre 18 et 72 heures.

D'autres approches encore, telle que celles décrites dans le document US-5455054 (NABISCO) ou EP-0482228 (SPECIALTY FOODS INVESTMENT) proposent des traitements de pasteurisation à des températures beaucoup plus élevées, de l'ordre de 70° C. Cependant, ces techniques n'ont pas pour objet des applications culinaires avec des propriétés moussantes notamment.

L'invention a notamment pour objectif de pallier certains inconvénients de l'art antérieur.

Ainsi, un objectif de l'invention est de proposer un procédé de production de blanc d'oeuf liquide qui soit simple et rapide, par rapport aux techniques antérieures, en conservant autant que faire se peut les qualités d'un blanc d'oeuf naturel.

Un autre objectif de l'invention est, selon au moins un mode de réalisation, de fournir un tel procédé, conférant au blanc d'oeuf de bonnes qualités culinaires, en particulier de bonnes propriétés moussantes et une stabilité dans le temps de la mousse obtenue.

Un autre objectif de l'invention est encore, selon au moins un mode de réalisation, de fournir du blanc liquide présentant une viscosité la plus proche possible du blanc d'oeuf naturel (par exemple inférieure à 0,05 Pa.s à 20°C) et un aspect naturel visuellement conservé tout au long de sa durée de vie.

L'invention a également pour objectif de fournir, selon au moins un mode de réalisation, du blanc d'oeuf liquide conditionné pouvant être conservé pendant une période longue, pendant au moins trente jours, en stockage réfrigéré (0 à 4 °C) et/ou à température ambiante.

Ces objectifs, ainsi que d'autres qui apparaîtront par la suite, sont atteints à l'aide d'un procédé de production de blanc d'oeuf liquide, pouvant dans certains cas être conservé à température ambiante, comprenant les étapes suivantes :
- stockage préalable d'oeufs d'une durée d'au moins 48 heures;
- cassage desdits oeufs, et récupération du blanc d'oeuf dans une cuve ;
- insertion d'une quantité prédéterminée de blanc d'oeuf dans un emballage ;
- fermeture étanche dudit emballage ;
- pasteurisation dudit emballage, par maintien à une température de pasteurisation comprise entre 51 et 53°C, pendant une durée de pasteurisation comprise entre 2 et 5 heures.

Un aspect important de l'invention est la durée fortement réduite du temps de pasteurisation, par rapport à l'art antérieur. Alors que l'homme du métier était persuadé que, dans cette plage de température, des durées 10 à 50 fois plus importantes étaient nécessaires, les inventeurs ont détecté qu'il était possible de réduire drastiquement cette durée. Ce temps réduit apporte non seulement un gain de temps important, essentiel dans le cadre de processus industriels, mais il permet en outre d'obtenir de meilleures qualités du produit fini, notamment en termes de mousse et de similitude avec un blanc d'oeuf naturel.

Les oeufs utilisés peuvent être des oeufs de poule, mais plus généralement des oeufs de tout autre oiseau produisant des oeufs consommables (cane, caille,...). Dans ce cas, bien sûr, les conditions préférentielles (températures et durées de traitement en particulier) décrites par la suite, et qui concerne plus spécifiquement les oeufs de poule, devront être adaptées.

Le blanc d'oeuf peut être pasteurisé sans aucun composant ajouté. Il est également possible qu'il soit formulé, en fonction des recettes et des applications.

Selon un mode de réalisation particulier, le procédé comprend une étape d'ajout dans ladite cuve d'au moins un hydrocolloïde. Il peut par exemple s'agir de gomme xanthane (E415) et/ou de gomme d'acacia (E414).

Ceci permet notamment d'obtenir une bonne stabilité de mousse dans le temps.

Selon un mode de réalisation particulier, ladite étape de cassage est suivie d'une étape de préchauffage, avant conditionnement. Suite au stockage préalable desdits oeufs, d'une durée d'au moins 48 heures, le blanc d'oeuf présente alors un pH d'au moins 8,7, et préférentiellement de l'ordre de 9,1, réduisant fortement la résistance thermique des bactéries et leur éventuelle recroissance après pasteurisation.

Les tests effectués sur ces températures et durées permettent d'obtenir un produit de bonne qualité, selon les objectifs fixés.

Selon un mode de réalisation particulier, ladite étape de pasteurisation met en oeuvre un appareil de cuisson utilisant de l'eau chaude.

La température de ce fluide caloporteur est de préférence la plus proche possible de la température cible, idéalement sans la dépasser de plus de 1°C, pour éviter des pertes de fonctionnalité.

Dans ce cas notamment, le procédé peut également comprendre une étape de pré-refroidissement dans ledit appareil.

Une étape de refroidissement, à une température inférieure à 4° C, est ensuite mise en oeuvre.

Selon un autre mode de réalisation, la pasteurisation du blanc d'oeuf conditionné peut se faire à l'air.

L'invention concerne également le produit fini, sous la forme d'un emballage contenant du blanc d'oeuf liquide pasteurisé et obtenu par un procédé de production tel que décrit ci-dessus.

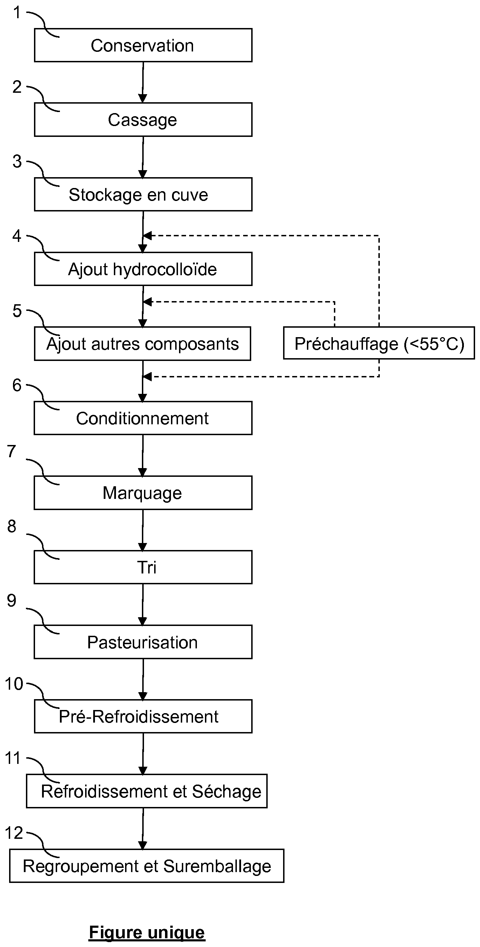

D'autres caractéristiques et avantages de l'invention apparaîtront plus clairement à la lecture de la description suivante d'un mode de réalisation préférentiel de l'invention, donné à titre de simple exemple illustratif et non limitatif, et de la figure unique annexée, présentant un organigramme simplifié du procédé de l'invention.

L'invention propose donc une nouvelle méthode, rapide et efficace, pour obtenir du blanc d'oeuf liquide, pouvant être conservé longtemps (au moins un mois), et le cas échéant, à température ambiante.

L'organigramme de la figure unique illustre de façon schématique un mode de réalisation particulier de ce procédé.

Avant de casser les oeufs, ceux-ci sont conservés (1) pendant quelques jours (par exemple 48 heures) afin que le pH du blanc d'oeuf soit au moins de 8,7. On sait en effet que le pH du blanc fraîchement pondu est de l'ordre de 7,5. Il se produit dans les premiers jours après la ponte un dégazement de CO₂ qui amène le blanc d'oeuf à un pH d'au moins 8,7. Il est donc nécessaire, pour obtenir ce pH, de conserver les oeufs suffisamment longtemps, avant traitement.

Les oeufs sont par ailleurs soigneusement choisis et sélectionnés, pour garantir une meilleure qualité microbiologique.

Ils sont cassés (2), selon l'une des méthodes connues. Le jaune et le blanc sont soigneusement séparés, et le blanc est stocké dans une cuve adaptée (3). Un soin particulier est apporté à l'absence de traces de jaune d'oeuf dans le blanc ainsi que, bien sûr, de coquilles ou micro-coquilles. Cette opération de casse est effectuée à une température entre 12° et 15° C.

Le versement dans la cuve, puis le traitement du contenu de celle-ci sont effectués en minimisant le cisaillement, qui entraînerait la formation de mousse dans le produit. Il est important d'éviter autant que faire se peut la formation de cette mousse. En effet, les protéines du blanc ne moussent qu'une fois, et c'est un des objectifs de l'invention de permettre l'obtention d'une mousse de bonne qualité, au moment de la préparation par l'utilisateur final.

Selon l'invention, il est possible de n'ajouter aucun élément au blanc d'oeuf, pour qu'il soit parfaitement « nature ».

Selon certains modes de réalisation, on prévoit l'ajout d'hydrocolloïdes (4). Il peut notamment s'agir, selon un mode de réalisation, d'un mélange de xanthane et d'acacia. On constate en effet que ce mélange particulier permet d'augmenter le délai d'apparition de la première goutte d'une mousse de blanc avant cuisson, c'est-à-dire qu'il permet d'obtenir une bonne stabilité dans le temps, tout en permettant d'obtenir une viscosité du blanc proche de celle du blanc naturel.

Le cas échéant, selon les modes de réalisation, d'autres composants, par exemple du sel ou du sucre, peuvent être ajoutés (5). Il est ainsi possible de fournir du blanc d'oeuf « formulé », adapté à certaines recettes (sucrées ou salées par exemple) ou certaines applications (boisson protéinée pour sportifs, par exemple).

Un préchauffage, à une température inférieure à 55°C, peut être appliqué préalablement au conditionnement. Cette étape de préchauffage est représentée en traits pointillés sur la figure, et peut intervenir directement avant le conditionnement (6) et/ou avant l'ajout d'hydrocolloïde (4) et/ou avant l'ajout d'autres composants (4).

Le contenu de la cuve est ensuite précautionneusement (de façon à éviter ou à tout le moins limiter le cisaillement) transféré dans des emballages pour l'étape de conditionnement (6).

Les emballages peuvent notamment être des sachets de type Doypack (marque déposée) en particulier des emballages équipés d'un bouchon, pouvant par exemple recevoir 350 grammes ou 1 kilo de blanc d'oeuf liquide, selon les applications. Cet emballage est fermé de façon étanche, par exemple par une soudure ultrason.

Un marquage (7), pouvant par exemple préciser la date, le lieu de l'emballage et/ou toute autre information nécessaire, peut être effectué sur l'emballage, par exemple sous la forme d'un marquage à jet d'encre thermosensible.

Une étape de tri (8) peut être mise en oeuvre, pour détecter et supprimer les emballages défectueux. Ce tri peut notamment comprendre un tri pondéral et/ou une recherche de métaux.

On effectue ensuite la pasteurisation (9) des emballages. Pour ceci les emballages sont placés dans un appareil de cuisson par eau chaude, à une température de 52° C pendant 3 heures dans ce mode de réalisation.

Il est important de noter que cette durée de 3 heures est très éloignée de celles préconisées dans l'art antérieur, qui prévoyait au minimum 18 heures et de préférence plusieurs jours. Les inventeurs ont en effet pu détecter que, non seulement ce temps réduit, combiné au pH cible, était suffisant pour obtenir un traitement salmonicide et listéricide (et autres pathogènes répertoriés dans cette application et ses usages) suffisant, mais qu'encore cette durée spécifique permet d'obtenir des propriétés culinaires conservées, en particulier pour des applications insuffisamment cuites à coeur pour être pasteurisées, telles que les mousses ou les iles flottantes, qui nécessitent une maîtrise précise de la bactériologie, ainsi que de bonnes propriétés moussantes, et une bonne stabilité de la mousse.

Après cette pasteurisation pendant 3 heures, un pré-refroidissement (10) est mis en oeuvre dans l'appareil, puis les emballages sont sortis de l'eau. Un refroidissement à moins de 4° C et un séchage (11) sont ensuite mis en oeuvre, dans une cellule de froid.

Enfin, les produits emballés ainsi pasteurisés peuvent être regroupés et sur-emballés (12) en vue de leur stockage et de leur distribution.

Cette approche permet ainsi la fourniture de blanc d'oeuf liquide au grand public, notamment par l'intermédiaire des grandes et moyennes surfaces, sous une forme sûre, puisque le produit est pasteurisé, pouvant être conservé longtemps (au moins 30 jours) et présentant de très bonnes qualités culinaires, par rapport à l'art antérieur, avec une viscosité et un aspect visuel proches de celle du blanc d'oeuf naturel.

L'emballage peut en outre, dans certains cas, être conservé à température ambiante, ce qui est notamment adapté aux réseaux de distribution spécialisés, notamment de type vente par correspondance.

## Revendications

1. Procédé de production de blanc d'oeuf liquide, **caractérisé en ce qu'**il comprend les étapes suivantes :
- stockage préalable d'oeufs d'une durée d'au moins 48 heures ;
- cassage desdits oeufs, et récupération du blanc d'oeuf dans une cuve ;
- insertion d'une quantité prédéterminée de blanc d'oeuf dans un emballage ;
- fermeture étanche dudit emballage ;
- pasteurisation dudit emballage, par maintien à une température de pasteurisation comprise entre51 et 53°C, pendant une durée de pasteurisation comprise entre 2 et 5h.

2. Procédé selon la revendication 1, **caractérisé en ce qu'**il comprend une étape d'ajout dans ladite cuve d'au moins un hydrocolloïde.

3. Procédé selon la revendication 2, **caractérisé en ce que** ledit hydrocolloïde comprend une gomme xanthane (E415) et/ou une gomme d'acacia (E414).

4. Procédé selon l'une quelconque des revendications 1 à 3, **caractérisé en ce que** ladite étape de cassage est suivie d'une étape de préchauffage, avant ladite étape d'insertion dans un emballage.

5. Procédé selon l'une quelconque des revendications 1 à 4, **caractérisé en ce que** ladite étape de pasteurisation met en oeuvre un appareil de cuisson dans l'eau chaude.

6. Procédé selon la revendication 5, **caractérisé en ce qu'**il comprend une étape de pré-refroidissement dans ledit appareil, suivi d'une étape de refroidissement, à une température inférieure à 4° C.

## Patentansprüche

1. Verfahren zur Herstellung von Flüssigeiweiß, **dadurch gekennzeichnet, dass** es die folgenden Schritte umfasst:
- vorheriges Aufbewahren der Eier für einen Zeitraum von mindestens 48 Stunden;
- Aufschlagen der Eier und Gewinnen des Eiweißes in einem Behälter;
- Einbringen einer festgelegten Menge an Eiweiß in eine Verpackung;
- dichtes Verschließen der Verpackung;
- Pasteurisieren der Verpackung durch Halten bei einer Pasteurisierungstemperatur zwischen 51 und 53°C während einer Pasteurisierungsdauer zwischen 2 und 5 Std.

2. Verfahren nach Anspruch 1, **dadurch gekennzeichnet, dass** es einen Schritt der Zugabe von mindestens einem Hydrokolloid in den Behälter umfasst.

3. Verfahren nach Anspruch 2, **dadurch gekennzeichnet, dass** das Hydrokolloid ein Xanthangummi (E415) und/oder ein Gummi arabicum (E414) umfasst.

4. Verfahren nach einem der Ansprüche 1 bis 3, **dadurch gekennzeichnet, dass** nach dem Schritt des Aufschlagens ein Vorerhitzungsschritt vor dem Schritt des Einbringens in eine Verpackung folgt.

5. Verfahren nach einem der Ansprüche 1 bis 4, **dadurch gekennzeichnet, dass** man bei dem Pasteurisierungsschritt eine Vorrichtung zum Kochen in heißem Wasser einsetzt.

6. Verfahren nach Anspruch 5, **dadurch gekennzeichnet, dass** es einen Schritt des Vorkühlens in der Vorrichtung, gefolgt von einem Kühlschritt bei einer Temperatur von weniger als 4°C umfasst.

## Claims

1. Process for the preparation of liquid egg white, **characterised in that** it comprises the following steps:
- previously storing eggs for at least 48 hours;
- breaking the said eggs, and recovering the egg white in a vat;
- inserting a predetermined quantity of egg white in a packaging;
- impermeably sealing the said packaging;
- pasteurising the said packaging, by maintaining a pasteurisation temperature of between 51°C and 53°C, for a pasteurisation time of between 2 and 5 hours.

2. Process according to Claim 1, **characterised in that** it comprises a step of adding at least one hydrocolloid in the said vat.

3. Process according to Claim 2, **characterised in that** the said hydrocolloid comprises a xanthan gum (E415) and/or an acacia gum (E414).

4. Process according to any one of Claims 1 to 3, **characterised in that** the said breaking step is followed by a preheating step, before the said step of inserting in a packaging.

5. Process according to any one of Claims 1 to 4, **characterised in that** the said pasteurising step uses an apparatus for cooking in hot water.

6. Process according to Claim 5, **characterised in that** it comprises a step of precooling in the said apparatus, followed by a cooling step, at a temperature of less than 4°C.
